Europäisches Patentamt

European Patent Office

Office européen des brevets

(19)

(11) Publication number:

# 0 218 636
# B1

(12) EUROPEAN PATENT SPECIFICATION

(45) Date of publication of patent specification: 23.05.90

(51) Int. Cl.⁵: **H 04 N 1/393,** G 02 B 26/10, G 02 B 27/00

(21) Application number: 86902203.8

(22) Date of filing: 21.03.86

(86) International application number: PCT/US86/00563

(87) International publication number: WO 86/05940 09.10.86 Gazette 86/22

(54) MULTI-FORMAT LASER PRINTER EMBODYING A METHOD FOR CHANGING OUTPUT IMAGE SIZES.

(30) Priority: 02.04.85 US 719091
02.04.85 US 719092
02.04.85 US 719171

(43) Date of publication of application:
22.04.87 Bulletin 87/17

(45) Publication of the grant of the patent:
23.05.90 Bulletin 90/21

(84) Designated Contracting States:
DE FR GB NL

(56) References cited:
DE-A-1 800 665
DE-A-2 621 057
DE-B-1 108 938
FR-A-2 356 963
FR-A-2 501 385
GB-A-1 157 402
US-A-3 603 727
US-A-3 995 110
US-A-4 294 506

(73) Proprietor: EASTMAN KODAK COMPANY (a New Jersey corporation)
343 State Street
Rochester New York 14650 (US)

(72) Inventor: MUKA, Edward
233 Chestnut Hill Drive
Rochester, NY 14617 (US)
Inventor: CHANDLER, Jasper, S.
185 Dorian Lane
Rochester, NY 14626 (US)
Inventor: KESSLER, David
164 Penn Lane
Rochester, NY 14625 (US)
Inventor: HARDY, James, Alan
285 Rockingham Street
Rochester, NY 14620 (US)

(74) Representative: Parent, Yves et al
Kodak-Pathé Département Brevets et Licences
Centre de Recherches et de Technologie Zone Industrielle
F-71102 Chalon-sur-Saône Cédex (FR)

Courier Press, Leamington Spa, England.

(56) References cited:

PATENTS ABSTRACTS OF JAPAN, VOL. 8, NO.
92, (P-271) (1529), 27 APRIL1984 & JP A, 597922
(HITACHI) 17 JANUARY 1984

PATENTS ABSTRACTS OF JAPAN, VOL. 8, NO.
105 (P-274) ((1542), 17 MAY 1984 & JP, A,
59152119 (MINOLTA) 26 JANUARY 1984

Patents Abstracts of Japan, vol. 8, no. 38,
(P-255) (1475), 18 February 1984 & JP, A,
58190919 (RICOH) 8 November 1983

EP 0 218 636 B1

**Description**

Technical Field

The present invention relates to method and apparatus for changing output image sizes in laser printers which use multi-faceted rotating polygons.

Background Art

Many optical printers use a laser scanning process. The intensity of a laser light beam focused on a two-dimensional photosensitive surface is modulated as the beam is moved relative to such surface to provide a two-dimensional output image at an image zone. In one common system, a rotating multi-faceted polygon is used to line scan a beam of light from the laser across a photosensitive member at the image zone. An acoustooptic modulator intensity modulates the beam in accordance with the gray or brightness level of pixels of a digital image held in a frame store memory. The rotating polygon has the advantages of high generation rates, high resolution and relatively maintenance-free operation.

The mirror facets when assembled will produce artifacts in a recorded image which are known as "banding". It is known that these artifacts are caused by tilt or pyramidal errors in the facets. High quality laser printers commonly incorporate an optical correction system for these pyramidal errors. A cylindrical correcting lens is used in the printer described in U..S. Patent No. 4,040,096 to Starkweather, issued August, 1977. The lesns which is disposed between a polygon and a photosensitive member has power only in one direction (page scan) and no power in a perpendicular direction (line scan).

French Patent FR—A—2,356,963 discloses a two dimensional flying spot laser scanner comprising a laser, a document carrier, and a rotating mirror. A fixed mirror is adjacent to the rotating mirror, and a lens directs the reflected beam from the rotating onto the fixed mirror. The fixed mirror reflects the beam through a moving cylindrical lens next to the document carrier, and this lens deflects the beam onto a document placed on the carrier In such a device the output image size cannot be changed. Patent DE—A—1,800,665 discloses a multi-image format facsimile printer which may include a rotating mirror for line sanning a light beam across an image zone to form an output image at such zone, means disposed between the mirror and the image zone and means for modifying the optical means for varying the length of a line scan at the image zone. A problem with such a device is the lack of versatility concerning the formats which can be obtained. US Patent US—A—4,247,160 to Bruggemann issued January 1981, discloses a laser polygon printer which has a positive cyclindrical mirror disposed between a polygon and a photosensitive member to correct for pyramidal errors. Both these laser printers print only one output image size. The current state of the art in laser color printing is to employ a constantly rotating polygon scanner which scans a fixed line length and uses a fixed number of pixels. The page length is also fixed. In another printer, the line scan length is adjusted by varying timing of the information modulation of the laser beam without adjusting any of the printer's optical elements or the angular velocity of the polygon. The page scan dimension is changed by adjusting the velocity of the photosensitive member. In another example, to reduce the line scan length by one-half, without changing sampling time, the numerical value of every other digital image pixel of a line in frame store memory has been used to information modulate the beam. Since only one-half of the digital pixels are used, this process results in a significant loss of information in the output image. This is particularly unsatisfactory if colored prints are to be made. If optical means are used to change the line scan length, then drastic changes have to be made to the optical system. Also, provision should be made for pyramidal error correction at the different output image sizes.

The object of the invention is to change line scan length by optical means without loss of information in the output image production by a polygon laser printer while still preserving pyramidal error correction.

Disclosure of the Invention

This object is achieved by a multi-image format laser printer which includes a rotating polygon (30) having mirror facets for line scanning a low beam across an image zone (PM) to form an output image at such zone, comprising optical means (44) disposed between the polygon and the image zone for optically conjugating in the page scan direction the operative mirror facet with the image zone to thereby correct for pyramidal errors, means for changing the length of a line scan at the image zone (PM) and for correcting for pyramidal errors at different line scan lengths by maintaining the optical conjugation between the operative polygon facet with the image zone in the page scan direction, said laser printer being characterized in that said optical means includes at least one cylindrical mirror (44) with optical power in the page scan direction, and said changing means includes means for moving said cylindrical mirror along the optical (41a) path to a new path position and means for changing the tilt angle of said cylindrical mirror at the new path position to continue to correct for pyramidal errors.

The output image size, is adjusted by changing the dimensions of an output image in line and page scan directions. The line scan length is changed by altering the optical distance between the polygon and the photosensitive member by moving the cyclindrical mirror to a new optical path position or by inserting a different cylindrical mirror at a new optical path position. The page scan dimenson is adjusted by changing the velocity of the photosensitive member. To correct for pyramidal errors at the new output image size, the cylindrical mirror which was moved to a new optical path position has its tilt angle changed or it is removed from the optical path and a different cylindrical mirror is inserted into the optical path. In

3

either case, the operative polygon facet and the image zone are maintained optically conjugate in the page scan direction. Pyramidal error correction is thereby provided for the new output image size.

Each time the cylindrical mirror is moved, changes are made in anamorphic beam shaping optics preceeding the polygon to form the beam waist in the line scan direction adjacent to the image zone.

Another embodiment of the invention aims at changing image formal size without actually moving cylindrical mirrors or lenses while still preserving pyramidal error correction. This embodiment of the printer includes first and second optical systems each effective when inserted into the optical path of the laser beam for forming a different line scan length of a photosensitive member. Means are provided for selectively inserting one of the beam shaping optical systems into the optical path of the beam.

Yet another embodiment of the invention aims at changing image format size without having to change the beam spot size every time the image format size is changed.

The invention also provides a method for changing the format size of an output image produced by a modulated gaussian beam of laser light which is line scanned by a polygon across an image zone, characterized by the steps of: changing the length of line scan at the image zone, adjusting the spacing between line scans, and correcting the pyramidal error at the new format size.

Brief Description of the Drawings

Fig. 1 is a diagram, partially in block and partially in schematic form, of a laser printer embodying apparatus for changing the output image format size;

Fig. 2 shows a side perspective of the laser printer of Fig. 1; and

Fig. 3 shows a side perspective of a portion of the laser printer embodying apparatus in accordance with the invention for changing output image size;

Fig. 4 is a block diagram of another embodiment of a laser printer in accordance with the invention, which includes two separate optical systems which can be selectively inserted into a beam path by positioning a mirror;

Fig. 5 is a detailed diagram of the optical system of the laser printer shown in Fig. 4;

Fig. 6 is a diagram, partially in block and partially in schematic form, of another embodiment of a laser printer according to the invention; and

Fig. 7 is a perspective of a portion of the laser printer of Fig. 6.

Modes of Carrying out the Invention

As used herein, the terms "anamorphic" and "astigmatic" are interchangeable. They generally refer to a gaussian laser light beam which is compressed or expanded along one direction relative to the perpendicular direction. The term "image size" refers to the area of a two-dimensional output image at an image zone.

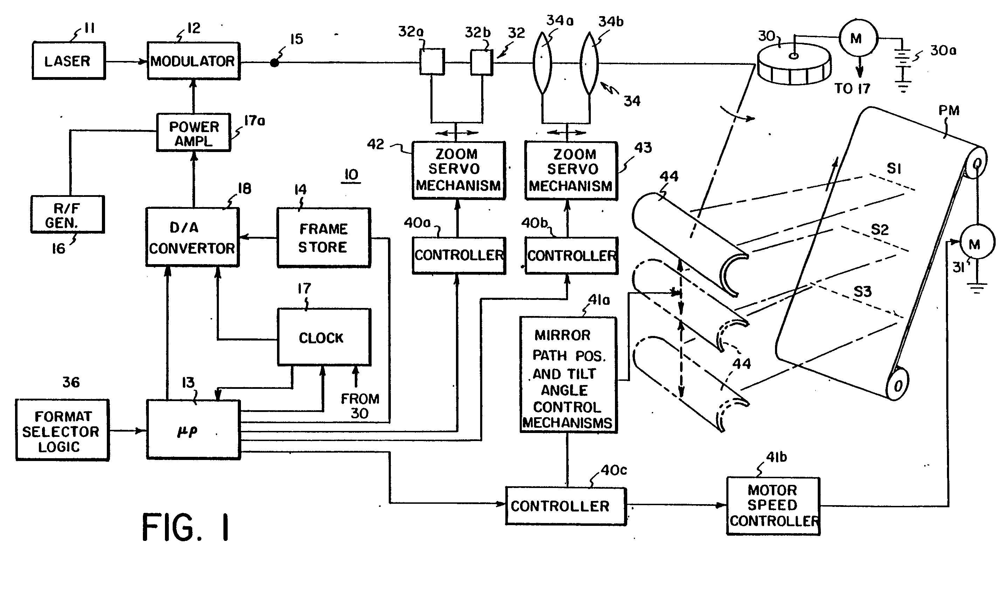

In Fig. 1, there is shown a laser printer 10 which includes at least one laser 11 for producing a beam of gaussian light, and a modulator 12. We will first discuss the general organization of the laser printer 10. The laser beam is information modulated or discretized in brightness by the modulator 12 which may for example be a single beam acoustooptic modulator. Modulator 12 may include a transparent cell which is made of an acoustooptic material such as glass or $TeO_2$ crystal and a piezolelectric transducer bonded to the cell. A radio frequency (R/F) signal is produced by an R/F generator 16. This signal at a predetermined frequency, usually in the range of 40—300 MHz, is applied to the transducer by way of a power amplifier 17a. The power amplifier scales the amplitude of the R/F signal. The transducer launches acoustic waves in the cell which produce sonic compression waves that create a diffraction wave grating.

This diffraction grating causes a portion of the input laser light beam passing through the cell to be diffracted out of its original path. Amplitude changes of the RF signal caused by the power amplifier 17a cause intensity modulation of the diffraction (first-order) and undiffracted (zero-order) beams. The intensity of the modulated diffracted light mean varies in response to RF signal amplitude. The modulated diffracted light beam, rather than the undiffracted beam, is utilized, e.g. applied to a deflector which, as will be discussed shortly, is a polygon that converts the modulated light beam into a line scan.

A microprocessor (μp) 13 in response to a clock signal produced by a clock 17 provides a signal to a frame store memory 14 which periodically causes the gray or brightness digital level of pixels of a digital image stored in the frame store memory 14 to be applied to a D/A converter 18. Converter 18 provides control signals to power amplifier 17a. The power amplifier 17a adjusts the amplitude level of the RF signal in response to the analog signal representative of the brightness of a pixel produced by D/A converter 8. The timing of the operation of the D/A converter 18 is provided by a clock signal from clock 17. This arrangement produces a modulated circularly symmetrical beam of gaussian light at position 15. The digital image can be provided in a number of ways such as by scanning a beam of light through a negative onto a photodetector which provides outputs representative of the gray or brightness level of image pixels. These levels are digitized and stored in frame store memory 14.

A scanning polygon 30 has a plurality of mirror facets. The operative facet deflects the modulated light beam and line scans it across a photosensitive member PM located at an image zone. Preferably, the polygon 30 is driven at a constant angular velocity by a motor 30a. The polygon 30 can be mounted on an air spindle. The polygon 30 drives a shaft encoder (not shown) which provides an input signal to the clock 17 representative of the beam position in the line scan. In response to this input signal and a signal produced by the microprocessor 13, the clock 17 is turned on and off as a function of the desired line scan length. The line scan length is selected by an operator and provided as an input to selector logic 36. The periodicity of the clock signal is adjusted as a function of the line scan length. For example, with shorter line scan lengths the frequency of the clock signal is increased to have the same number of pixels per line.

As the beam is line scanned by an operative one of the mirror facets of the polygon 30, the beam forms an output image on the photosensitive member PM. The term "photosensitive member" will be understood to include a photographic film, photographic paper, a photoconductor used in a copier/duplicator and any other means responsive to a source of light to produce a visible output image. The elements of this output image are also called pixels. The member PM is continuously driven in the page scan direction by a variable speed DC motor 31. The beam is line scanned at a much higher speed than the speed of the photosensitive member. Alternatively, the photosensitive member PM can be held stationary during line scans and incrementally moved in the page scan direction between line scans. It will be understood tht the light beam need not be monochromatic but can also be polychromatic if the apparatus is to produce colored prints. The operation of polygons, lasers, optics and modulators are well understood in the art. For a more complete description of their operations, see Urbach et al, "Laser Scanning for Electronic Printing", Proceedings of the IEEE, 597 (June, 1982).

In operation, to change the line scan length, a cylindrical mirror is moved to a new position and its tilt angle is changed to provde for pyramidal error correction. The dimension in the page scan is changed by adjusting the velocity of the photosensitive member PM. No changes are made to the angular velocity of the polygon 30. Anamorphic beam shaping optics preceeding the polygon are adjusted each time the cylindrical mirror is moved to provide a substantially circularly symmetrical beam at the image zone.

In the laser printer 10, between position 15 and the polygon 30, there are two anamorphic beam shaping zoom lens systems 32 and 34 respectively. Each of these zoom lens systems has two cylindrical lenses. Zoom lens system 32 has cylindrical lenses, 32a and 32b. Zoom lens system 34 has cylindrical lenses 34a and 34b. The line scan zoom lens system 34 is positioned at all image format sizes to shape the circularly symmetrical beam (at position 15) so that the beam's waist in the line scan direction is always near or adjacent to the image zone. The page scan zoom lens system 32 shapes the beam so that at all image format sizes the beam's waist in the page scan direction is formed near or adjacent to the operative polygon facet. Since no optical magnification power exists in the line scan direction between the reflective mirror facets on the polygon or a cylindrical mirror 44 and the photosensitive member PM, the beam size (spot size) in the line scan direction at the image zone is adjustable only by zoom lens system 34. Lens system 32 in combination with the concave cylindrical mirror 44, adjusts the beam size (spot size) in the page scan direction at the image zone so that the beam spot of the light incident on the photosensitive member PM is substantially circularly symmetrical. Exact circular symmetry may not be necessary to provide quality.

The cylindrical mirror 44 also provides pyramidal error correction as will be described later. The beam spot size is adjusted for each output image size. At any given output image size, it is higly desirable that the beam spot size be maintained sufficiently constant as it is line scanned at the image zone to provide a high modulation transfer function (MTF) for sharp prints. In the line scan direction, this does not create a problem if the beam's waist is kept adjacent to the image zone. For laser printers of the type described using up to about 1500 spots in scan line lengths of about 100 mm, once the zoom lens system 32 has been positioned, there is a very small spot size change of the beam along the length of the line scan at the image zone. The spot size change that does occur will not significantly alter the line scan MTF.

In order to change the output image size, an operator provides an input into the format selector logic 36. Logic 36 provides a digital input to a microprocessor 13 which provides control signals to the frame store 14, the clock 17, and controllers 40a, 40b and 40c. Controllers 40a and 40b respectively control the zoom lens system 32 and 34 using drive zoom servo mechanisms 42 and 43 respectively. Controller 40c controls mirror path position and tile angle control mechanisms 41a and a motor speed controller 41b. Control mechanisms 41a control the cylindrical mirror 44 path position and tilt angle. Controller 41b controls the page scan drive mechanism that moves the photosensitive member PM.

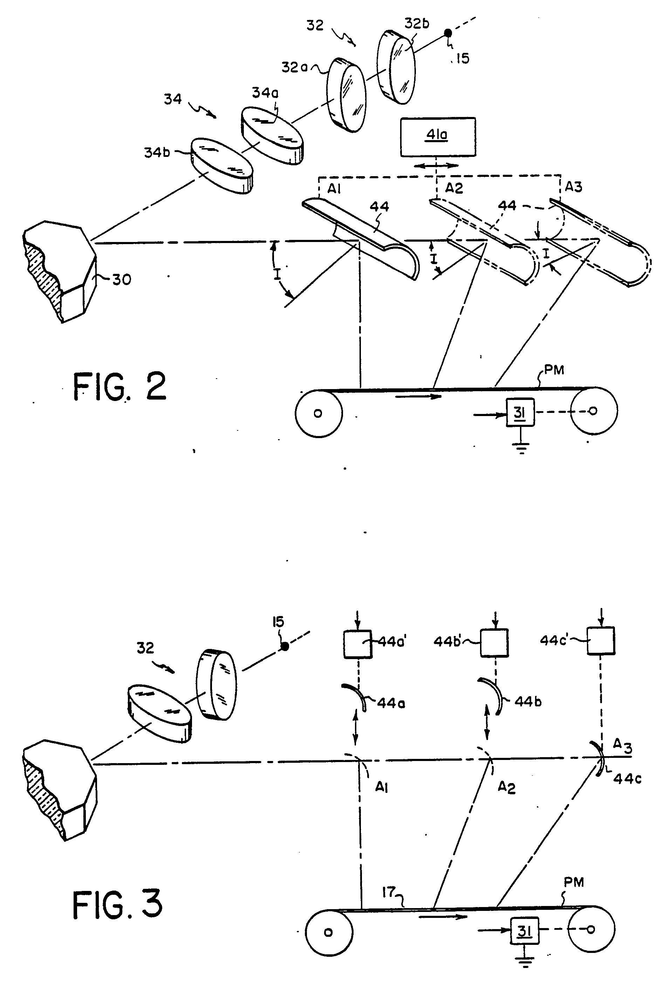

Both mechanisms 42 and 43 will be understood to include two separate adjustment devices. The first adjustment device moves both the cylindrical lenses as a unit to a new position along the optical path and the second adjustment mechanism controls the spacing between the lenses. For example, as discussed above, zoom lens system 34 is adjusted by mechanism 42 to shape the beam to form a beam waist in the line scan direction adjacent to member PM for each different output image format size. If, for example, the optical distance between the polygon 30 and the photosensitive member PM is increased by moving mirror 44 from position $A_1$, to position $A_2$ or $A_3$ (see Fig. 2), controller 40b will provide an input signal to mechanism 43 which moves both lenses 34a and 34b to a new path position closer to position 15 and then adjusts the spacing between these lenses. In its new position, zoom lens system 34 changes the beam spot size in the line scan direction. The mirror 44 in a new path position, varies the beam spot size in the page scan direction at the image zone. To shape the page scan spot size, the controller 40a repositions the zoom lens system 32 to shape the beam so that a generally circularly symmetric beam spot is provided at the image zone. In general, the larger the output image size, the larger the desired spot size.

To change the page scan length, the controller 40c, in response to signals from the microprocessor 13, also provides control signals to motor speed controller 41b. Controller 41b adjusts the velocity of variable speed motor 31 an thereby changes the output image page scan dimension. When the mirror 44 is at position $A_1$, as shown in Fig. 2, the line scan has a length $S_1$. The member PM is continuously driven in the page scan direction at a constant velocity proportional to the applied voltage by motor 31 as the laser beam is line scanned by the polygon 30.

When the mirror 44 is moved for example from position $A_1$ to position $A_2$ (the line scan length is shown as $S_2$, where $S_2$ is greater than $S_1$), the controller 41b applies a higher voltage across motor 31. The velocity of the motor 31 is increased. Similarly at position $A_3$ where the line scan is at a length $S_3$ (its greatest length), the highest voltage is applied across motor 31. Motor 31 drives the photosensitive member PM at its highest velocity.

Each facet mirror on the polygon 30 when not perfectly assembled can have a tilt or pyramidal angle error which causes pixel position error in the page scan direction to be introduced into a light beam at the image zone. Artifacts produced in the image which are a result of pyramidal errors are known as "banding". The cylindrical mirror 44 (with power in only the page scan direction) makes optically conjugate the operative polygon facet and the image zone. In other words, mirror 44 forms an image of the operative facet of polygon 30 at the image zone in the page scan direction. This conjugation process corrects for pyramidal errors.

For a more complete discussion of polygon pyramidal errors and the theory behind their correction, see the above-referred to article in the Proceedings of the IEEE by Urbach et al.

A cylindrical mirror is preferable to a cylindrical lens if a polychromic beam is used, since a mirror optically relays an image of the beam on the operative polygon facet mirror to the member PM at all line scan angles and at multiple wavelengths without introducing refraction errors.

The distance the image zone is from the polygon is directly related to the length of the line scan. This distance can readily be changed by positioning cylindrical mirror 44 in accordance with equation (1) below. More specifically, the distance $(L_1 + L_2)$ from the polygon to the image zone where member PM is located is given by the equation:

$$L_1 + L_2 = \frac{S}{2 \tan \alpha} \tag{1}$$

where
$L_1$ is the distance along the center line of the optical axis between polygon 30 and mirror 44;
$L_2$ is the distance along the center line of the optical axis between mirror 44 and member PM;
$S$ is the length of a scanned line at the image zone; and
$\alpha$ is the half field angle which is determined by the polygon duty cycle.

Once the mirror 44 is moved to change the line scan, then changes must be made to at least one mirror parameter to continue to correct for pyramidal errors. More specifically, the operative facet of the polygon 30 and the image zone must again be made conjugate. The following is a mathematical statement of the relationship which produces this conjugate:

$$\frac{1}{L_1} + \frac{1}{L_1} = \frac{2}{R \cos (I)} \tag{2}$$

where
$R$ is the radius of curvature of mirror 44;
$I$ is the tilt angle of the mirror 44 which is the angle between where the center line of the light beam contacts the mirror surface and a normal engages the mirror surface at such point of contact; and
$L_1$ and $L_2$ are as defined above.

As noted above, it is desirable that the zoom lens system 34 images the line scan beam waist so it is adjacent to the image zone for constant MTF considerations. In the embodiment shown in Figs. 1 and 2, since the radius R is fixed, only the tilt angle I can be adjusted. As illustrated in Fig. 2, by decreasing the tilt angle I of the cylindrical mirror 44, the relationship of equation (1) can be satisfied at longer distances $(L_1 + L_2)$. The microprocessor 13 provides appropriate control signals to controller 40c which positions the mirror 44 and adjusts its title angle I to satisfy equation (1). As discussed above, at larger output image sizes, the velocity of the member PM must be increased in the page scan direction because of longer line scan lengths. This adjustment is made by motor speed controller 41b.

While the operative polygon mirror facet must be optically conjugate with the image zone, the optical magnification or power need not be unity. Stated another way the spot size of the beam on the facet may be larger than the spot size of the beam on the photosensitive member. In fact, it is desirable to have an optical magnification of less than unity to minimize the effect on the beam of any surface defects in the polygon facet mirrors.

The line scan length is changed by altering the optical distance between the polygon and the photosensitive member PM by moving the cylindrical mirror to a new optical path position. Also, by properly selecting tilt angle I to satisfy equation (2), the cylindrical mirror 44, in the page scan direction, optically conjugates the polygon facet mirror with the image zone and corrects for pyramidal errors. The combination of the zoom lens systems 32, 34, polygon 30 and cylindrical mirror 44 shape the beam so that it has the appropriate size at the image zone. The result of this process is to make the image zone optically conjugate with position 15.

The following is a specific example with two image formats, one with scan length of 4 inches (=101.6 mm) and the other with scan length of 5 inches (=127 mm). It should be noted that the position of the lense 32a and b and 34a and b in the drawings is not to scale. The cylindrical mirror 44 radius R is 92.2 mm. In scan line direction the beam waists are .04 and 0.05 mm radius (e⁻²) and they are located 2 mm and 2.5 mm into the photosensitive member PM. At position 15 the beam radius is .05 mm. The wavelength is .633 microns. The scan direction beam shaper or zoom system has two cylindrical lenses. Lens 34a with focal distance of −62.7 mm and 34b with focal distance of 175 mm. The distances from position 15 to lens 34a for the two formats are 31.55 and 60.81 mm, the distances from lens 34a to 34b are for the two formats 296.6 and 231.8 and the distance from lens 34b and the image drum are 389.8 and 524.2 mm.

In the page direction there are provided two cylindrical lenses 32a with focal distance of 50 mm and 32b with focal distance of 200 mm. The distances from position 15 to lens 32a for the two formats are 44.75 and 43.47 mm, between 32a and 32b 175.9 and 115.9 mm, and between lens 32b and the polygon 30, the distances are 299.4 and 360.7 mm. The distances from the polygon to the cylindrical mirror 44 are 159.6 and 182.2 mm, the title angles I of the mirror are 46.25° and 33.94°. The distances from mirror 44 to the drum are 39.9 and 33.94 mm. In this example, the photosensitive member was in the form of a drum. The drum radius is 53.7 mm and the beams incidence angles onto the drum in the page direction are 90°. At the drum, the beam radii in the page directon are .059 and 0.74 mm respectively. For two or more formats the line direction zoom lens system may consist of three lenses.

Fig. 3 shows an embodiment similar to that in Figs. 1 and 2, except that cylindrical mirrors 44a, 44b and 44c are selectively moved into and out of the optical path of the laser beam. In operation, one of the solenoids 44a′, 44b′ and 44c′ is energized by controller 40c and moves its mirror 44 into the optical path. At this time the other solenoids are energized in an opposite sense by controller 40c to withdraw their mirrors from the optical path. By careful selection of R and I parameters to satisfy equation (2) which not only provide pyramidal correction but also provide the desired magnification in the page scan direction at the image zone, the need for a page scan zoom lens system can be obviated. Each one of the three different mirrors 44a, 44b, issued in providing a different output image size. Each cylindrical mirror has a different radius R and a different tilt.

For an example of the Fig. 3 embodiment, we will use the same input and output conditions as in the previous example. Also the same lenses 34 are used and the position of lenses 32 are fixed at their locations for the 4 inch format. Two different mirrors 44, one wth radius of 83.1 mm and the other with radius of 117.5 are employed. The distances from the polygon 30 to the mirrors 44 are 158.3 and 226.1 mm respectively, and the tilt angles 1 of these mirrors are 40.34° and 23.62° respectively. The distances from mirror 44 to the photosenitive member are 39.6 and 70.6 mm respectively. In this example, the photosensitive member PM was in the form of a drum. The drum radius is 50.8 mm and the beams incidence angles onto the drum a in the page direction are 90°. At the drum, the beam radii in the page scan direction are .059 and .074 mm respectively.

The system previously described is capable of printing only a single length scan line. In order to print large quantities of images of substantially different dimensions, it is necessary that the optical system of the single format described above be changed to accommodate different formats. Incorporaton of a mechanical format change will enhance the versatility and productivity of the complete system.

Looking back to the embodiment shown in Figs. 1 and 2, it will be appreciated that the disclosed system requires a numer of relatively complex moving components and associated control mechanisms. The precise control required to move the zoom lens systems 40a and 40b with the servo mechanisms 42 and 43 respectively, adds to manufacturing and assembling costs. Also needed is the control mechanism 41a that controls the cylindrical mirror 44 path position and tilt angle. In order to move the large number of components required to change format size, one can readily see that the precise control and close tolerances required would increase the initial cost of the components involved, decrease the reliability of the system as a whole, and increase field service cost.

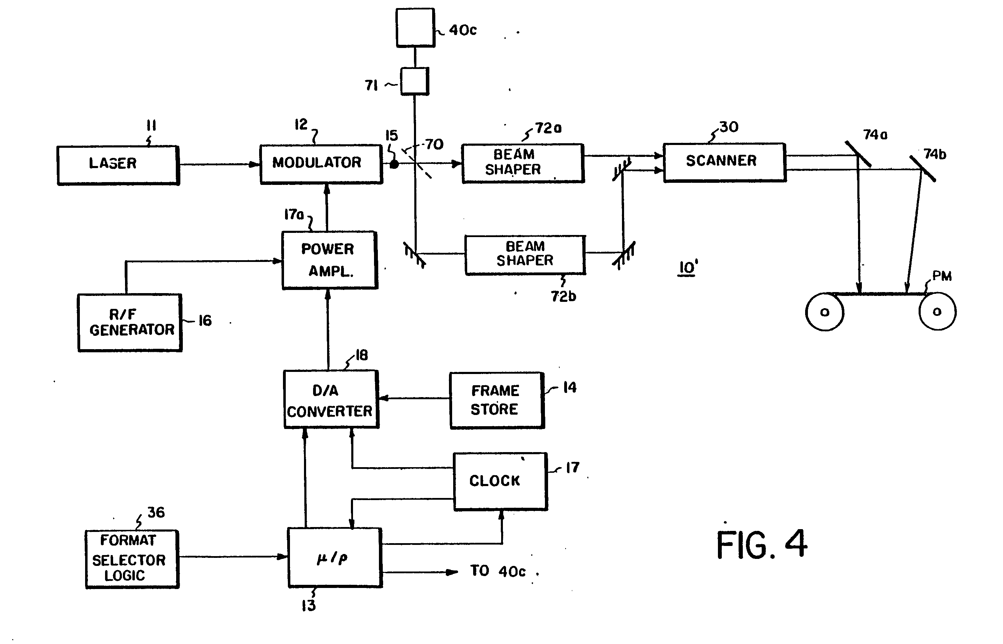

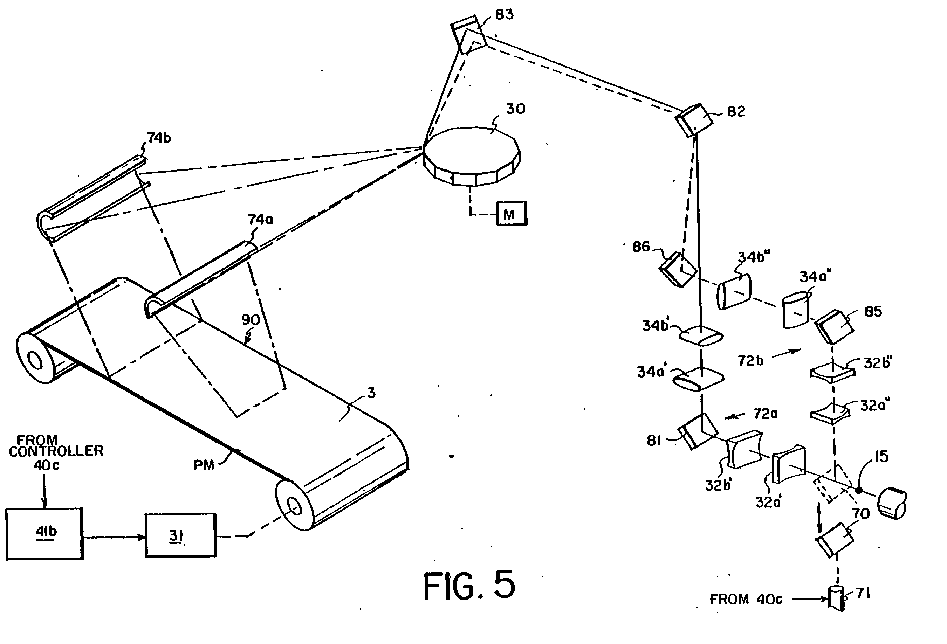

The embodiment of the present invention shown of Figs. 4 and 5 further reduces the number of movable components in order to lower the manufacturing and assembling costs and to improve reliability.

Turning now to Fig. 4, a block diagram arrangement of laser printer 10′ in accordance with the invention is shown. The printer 10′ includes at least one laser 11, modulator 12, frame store memory 14 and a microprocessor 13, which form a circularly symmetrical beam spot at position 15. It will be understood that the printer 10′ also includes an R/F generator 16, power amplifier 17a, D/A converter 18, clock 17 and format selector logic 36.

A mirror 70 is movable by a solenoid 71 between two positions under the control of driver 40c. In its first position (solid line), the mirror 70 does not intercept the beam of laser light and the beam is incident upon a first optical system which includes an anamorphic beam shaping system 72a and a fixed cylindrical mirror 74a. The fixed cylindrical mirror 74a conjugates the polygon and the image zone to correct for pyramidal errors in accordance with the conditions of equations (1) and (2) The beam is line scanned by the polygon 30 on a continuously moving photosensitive member PM.

As a specific example, the fixed cylindrical mirror 74a, has a radius of 120.142 mm, an angle of incidence of 40.136°, and is located 131.479 mm from the polygon and 70.621 mm from the photosensitive

7

member. The photosensitive member is wrapped on a drum with a radius of 76.2 mm. The scan line created is approximately 100 mm long.

To select the second optical system, the mirror 70 is moved to its second position where it intercepts the beam and reflects the beam to beam shaping system 72b and by way of several mirrors, onto the polygon scanner 30. A cylindrical mirror 74b conjugates the polygon and the image zone to correct for pyramidal errors at the new line scan length in accordance with equations (1) and (2). The second optical system includes system 72b and mirror 74b.

As a specific example, the fixed cylindrial mirror 74b, has a radius of 131.479 mm, an angle of incidence of 27.746°, and is located 202.659 mm from the polygon and 93.341 mm from the photosensitive member. The scan line recreated is approximately 150 mm long.

Turning now to Fig. 5 where the laser printer 10' is shown in more detail, beam shaping system 72a includes fixed line and page scan beam shaping lens elements. More specifically, cylindrical lens elements 32a' and 32b' shape the beam in the line scan direction while lens elements 34a' and 34b' shape the beam in the page scan direction. Beam shaping system 72b also includes fixed line and page scan beam shaping lens elements. More specifically, cylindrical lens elements 32a'' and 32b'' shape the beam in the line scan direction so that a beam waist is formed adjacent to the image zone, while lens elements 34a'' and 34b'' shape the beam in the page scan direction.

It is well known in the art to design the shapers as interleaved cylindrical optical systems. However, it may be more economical to design the line direction beam forming optics with conventional spherical optics and follow this with a cylindrical optical system to re-shape the beam to provide the required page direction beam size at the polygon. This reduces by one half the cylindrical optics required for the shaper and enhances manufacturability.

If the optical system were to be modified as described above, the two cylindrical lenses 32a' and 32b' in optical system 72a would be replaced by three spherical lenses. The first spherical lens would have a focal length of +60 mm and would be located 37.201 mm from point 15 (reference point shown in Figs. 2 and 3). The beam waist at location 15 has a radius of 55.45 microns and a wavelength of 633 nm. The second spherical lens would have a focal length of −20 mm, and would be located 154.452 mm from the first lens. The third spherical lens would have a focal length of +160 mm, and would be positioned 176.847 mm from the second lens. The first of two cylindrical lens elements has a focal length of 118.052 mm and is located 131.922 mm from the third spherical lens. The second and final cylindrical lens is located 128.343 mm from the first cylindrical lens and has focal length of 24.767 mm. The distance from this second cylindrical lens to the polygon is 421.235 mm. Mirrors 81, 82 and 83 would continue to be used to direct the beam onto the surface of the operative facet of the polygon 30.

The optical system 72b would also contain the same number of lenses as the above-described modifications to optical system 72a. Accordingly, the three spherical lenses would have the following specifications: the first cylindrical lens would be located 44.498 mm from point 15 and would have a focal length of +50 mm. The second lens would be 89.672 mm from the first and would have a focal length of −20 mm. The third lens would be 271.590 mm from the second lens and would have a focal length of +225 mm. The first cylindrical lens element is located 115.532 mm from the third spherical lens and would have a focal length of 190.403 mm. The second and last cylindrical lens would be located 178.760 mm from the first cylindrical lens and would have focal length of 21.091 mm. This last lens is also 403.948 mm from the polygon, with the beam using mirrors 86, 82 and 83 to reach the polygon after passing through the modified optical system 72b. (Note: Decimal places carried in the preceding examples are for computational consistency and are not meant to imply tolerances required in component or assembly fabrications.)

When the first optical system is inserted into the path, the light beam is not intercepted by mirror 70 and the beam is shaped by beam shaping system 72a. Mirrors 81, 82 and 83 are also provided to direct the beam to be incident onto the surface of the operative facet of the polygon 30. From this facet the beam is reflected off fixed cylindrical mirror 74 onto the photosensitive member PM.

When mirror 70 is inserted into the optical path, beam shaping system 72b operates upon the beam. Also mirrors 85, 86, 82 and 83 direct the beam to be incident upon the operative facet of polygon but displaced from the point where the first beam intercepts the operative polygon facet. The separation at the operative polygol facet between the beam from the shaper 72a and 72b is adequate for the beam from shaper 72b to pass beneath cylindrical print mirror 74a and be reflected by cylindrical print mirror 74b instead. The beam reflected from cylindrical print mirror 74b is then directed onto the photosensitive member PM. The photosensitive member PM is driven by a motor 31 operated by a controller 41b to adjust the velocity of the moving member PM. When the first optical system is inserted into the beam path, the line scan is longer than when the second optical system is inserted into the beam path and the velocity of member PM must be increased.

Thus, it can be seen that the format changing system of the embodiments illustrated in Figs. 4 and 5 will have significant impact on reducing the cost over the format changing zoom system previously disclosed.

Control mechanisms to move components and assure proper motion are reduced from five to one and the remaining control mechanism is required to control the precise location of a single component.

Lens mounts will also have impact on the system cost. Because the number of moving mechanisms is

8

reduced from five to one, the reliability of the format change operation would improve by a factor of about five. In the zoom system, each shaper mount must reproduce the five points in space required to locate a thick cylindrical optic and the mirror mount must reproduce the four points in space required to locate a simple cylinder. Thus, it can be seen that the total of twenty-four (24) constrained points in space for the zoom system contrasts with the three points required to be reproduced by the plane mirror used as a beam diverting device in the Figs. 4 and 5 embodiment.

Even though the number of optical components in the beam shaper increases from at leat five to approximately ten, the tolerances on these components are reduced since the design is not constrained by the need to zoom components. However, the cost of optical components probably will increase by less than a factor of two. As with the optical component count, the number of mounts must also increase but because they are nearly identical, their total cost will not increase proportionately. In addition, the complexity of the mounts has been decreased by a factor of eight.

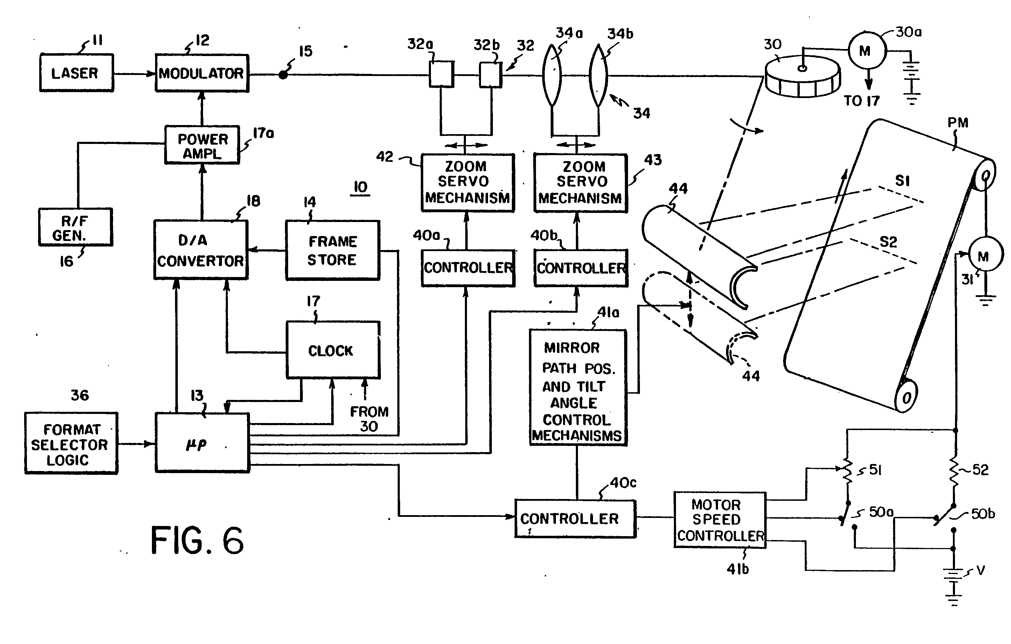

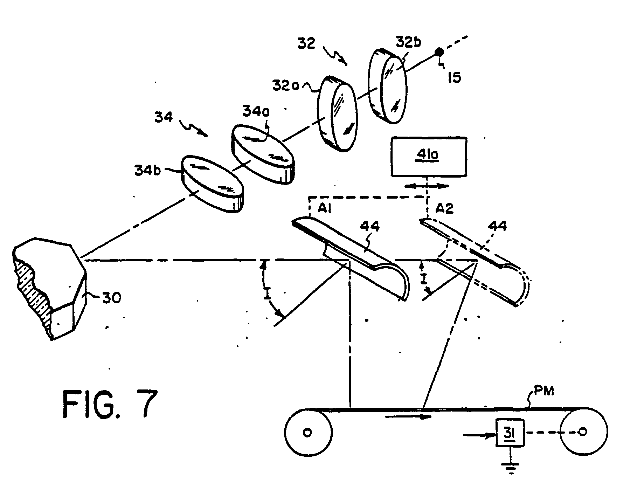

Turning now to Figs. 6 and 7, there is shown another embodiment of the invention, devised to change image format size without having to change the beam spot size every time the image format size is changed. As a matter of fact, it has been determined that a sharp in-focus beam spot at the image zone will remain in focus over a range of line scan lengths.

In Figs. 6 and 7, components identical to those shown and disclosed in connection with Fig. 1 are identically numbered. The disclosure of the Fig. 6/7 embodiment will therefore be confined to those of its components not already described and to features specific to this embodiment.

The cylindrical mirror 44 also provides pyramidal error correcton. The beam spot size is adjusted for two positions and $A_1$ and $A_2$ (Fig. 7) of the mirror 66. At any given output image size, it is highly desirable that the beam spot size be maintained sufficiently constant as it is line scanned at the image zone to provide a high modulation transfer function (MTF) for sharp prints. In the line scan direction, this does not create a problem if the beam's waist is kept adjacent to the image zone. For laser printers of the type described using up to about 1500 spots in scan line lengths of about 100 mm, once the zoom lens system 34 has been positioned, there is a very small spot size change of the beam along the length of the line scan at the image zone. The spot size change that does occur will not significantly alter the line scan MTF. Analysis of system MTF and acutance shows that the printer spot size is not a critical factor on the sharpness of color prints over a small range or interval of line scan lengths. Accordingly, if it is desired to produce prints of 3 1/4, 3 1/2 and 4 inches (82.6, 88.9 and 101. 6mm) wide (line scan lengths), then apparatus in accordance with the invention may, for example, use an optical scan of 4 inches with a spot size in focus at the image zone for the 3 1/2 inch scan length or even the 3 1/4 inch scan length. Thus in accordance with the invention, if the polygon 30 is continued to be rotated at a constant velocity, mirror 44 stays at position A, (see Fig. 7), only the frequency of the clock 17 need be changed to change the line scan length. If the range of line scan lengths is kept within a small interval, then the spot size will remain in focus at the image zone. In other words, a sharp image will be formed on the photosensitive member at the image zone.

Controller 40c, in response to signals from the microprocessor 13, provides control signals to motor speed controller 41b. Controller 41b adjusts the velocity of variable speed motor 31 and thereby changes the output image in the page scan direction or dimension. With mirror 44 at position $A_1$, controller 41b closes switch 50a and opens switch 50b. A source of DC voltage shown as battery V applies a voltage across the motor 31. The applied voltage is scaled by adjustable resistor 51, the resistance of which is adjusted as a function of desired page scan size.

When the mirror 44 is at position $A_1$, as shown in Fig 2, the line scan has a length $S_1$ for a predetermined spot size. For a specific example, this spot size could be for a line scan length of 3 1/2 inches. If, for example, a print of 3 1/4 inches line scan length is desired, the spot size is not changed but the frequency of the clock 17 is increased. For a line scan length of 4 inches, the clock frequency is reduced. When line scan lengths are to be produced within a first range (using the first spot size where it remains in focus at the image zone), the controller 41b opens switch 50b and close switch 50a. It also adjusts the value of resistor 51 to change the page scan lengths of the output image.

When the mirror 44 is moved for example from position $A_1$ to position $A_2$ (the line scan length is a predetermined length shown as $S_2$, where $S_2$ is greater than $S_1$), the controller 41b applies a higher voltage across motor 31. The resistor 52 has a lower resistance than resistor 51. To operate at line scan length $S_2$, the controller 41b opens switch 50a and close switch 50b. The velocity of the motor 31 is increased. When the mirror 44 is at its position $A_2$, only one possible line scan length has been disclosed. It will be understood that a small range of line scans could also be used by adjusting the frequency of clock 17, provided the spot size remains in focus at the image zone.

It should be understood that the format change system according to the invention could be used with a laser printer that uses a rotating galvanometer mirror scanner for line scanning in place of the multi-faceted rotating polygon. This format change system could also be used in the output of an electrostatic copier of computer output microfilmer.

Advantages and Industrial Applicability

An apparatus that changes image format size without loss of information in the output image is useful as a product, for example, in the output of a printer which makes prints of photographic negatives using gaussian laser light which scans a photosensitive member by means of a rotating polygon having mirror

# EP 0 218 636 B1

facets for line scanning the laser beam. Such an apparatus has the advantage of producing a high resolution print at a lower cost.

## Claims

1. Multi-image format laser printer which includes a rotating polygon (30) having mirror facets for line scanning a low beam across an image zone (PM) to form an output image at such zone, comprising optical means (44) disposed between the polygon and the image zone for optically conjugating in the page scan direction the operative mirror facet with the image zone to thereby correct for pyramidial errors, means for changing the length of a line scan at the image zone (PM) and for correcting for pyramidal errors at different line scan lengths by maintaining the optical conjugation between the operative polygon facet with the image zone in the page scan direction, said laser printer being characterized in that said optical means includes at least one cylindrical mirror (44) with optical power in the page scan direction, and said changing means includes means for moving said cylindrical mirror along the optical (41a) path to a new path position and means for changing the tilt angle of said cylindrical mirror at the new path position to continue to correct for pyramidal errors.

2. Laser printer as set forth in Claim 1, wherein said optical means includes at least two cylindrical mirrors (44a, 44b, 44c) with different radius of curvatures and tilt angles, and said changing means includes means (44a', 44b', 44c') for selectively inserting only a particular one of the cylindrical mirrors into the optical path of the beam.

3. Laser printer as set forth in Claim 1, wherein said optical means comprises a) first and second optical systems (72a, 72b, 74a, 74b) each effective when the optical path of the beam passes therethrough for forming a different line scan length at the image zone, each of said optical systems includes a cylindrical mirror (74a, 74b) disposed between the polygon and the image zone and effective to operate on the beam to provide pyramidal error correction by making the operative polygon facet and the image zone optically conjugate in the page scan direction and b) a mirror (70) movable between first and second positions for respectively inserting said first and second optical systems into the optical path of the beam, and wherein said means for modifying said optical means comprises drive means (40c) for moving the mirror between its first and second positions.

4. Laser printer as set forth in any one of claims 1 to 3, including beam shaping means (72a, 72b) preceding the polygon for forming a beam waist in the line scan direction at the new format size and positioning such beam waist adjacent to the image zone.

5. Laser printer as set forth in Claim 4, wherein said beam shaping means includes a zoom lens (34) system having two cylindrical lenses (34a, 34b) with power in only the line scan direction.

6. Laser printer as set forth in Claim 1, wherein said optical means includes cylindrical mirror means (44) effective in a first state for producing a first beam spot size in focus at the image zone for a range of line scan lengths and, in a second state, a second beam spot size in focus at the image zone for at least one predetermined line scan length not in such range.

7. Laser printer as set forth in any one of claims 1 to 6, comprising means (41b) for changing the velocity of a moving photosensitive member placed at the image zone when the output image size is changed.

8. Laser printer as set forth in claims 2 or 3 wherein said cylindrical mirrors have different radius of curvature and tilt angles to correct for respective pyramidal error and conjugation.

9. Laser printer as set forth in any one of claims 1 to 7, having a memory (14) for storing a digital image formed of pixels representing brightness levels, characterized by adjustable means (12) for periodically intensity modulating said light beam in accordance with the stored pixel brightness levels, the modulation periodicity being a function of the line scan length at the image zone.

10. Laser printer as set forth in claim 1, wherein the rotating polygon (30) is replaced by a mirror driven by a rotating galvanometer.

11. Method for changing the format size of an output image produced by a modulated gaussian beam of laser light which is line scanned by a polygon across an image zone, comprising the steps of:
    a) changing the length of line scan at the image zone;
    b) adjusting the spacing between line scans; and
    c) correcting for pyramidal error at the new format size,
said method being characterized in that it further comprises the steps of:
    i) adjusting beam size and waist location in the line scan direction; and
    ii) adjusting beam size in the page scan direction.

12. The method as set forth in claim 11, including the step of anamorphically shaping the beam before the polygon so that at different image formats the beam waist is formed in the line scan direction adjacent to the image zone.

# EP 0 218 636 B1

**Patentansprüche**

1. Mehrformat-Laserdrucker mit einem Polygonspiegelrad (30), zur zeilenweisen Bilderzeugung innerhalb einer Bilderzeugungsfläche (PM) unter Anwendung eines Strahls von geringer Intensität, wobei der Drucker zum Ausgleich von in Zeilenvorschubrichtung auftretenden Pyramidalfehlern zwischen Spiegelrad und Bilderzeugungsfläche angeordnete optische Mittel (44) zum Konjugieren der jeweils wirksamen Polygonspiegelfläche mit der Bilderzeugungsfläche aufweist, und wobei eine Einrichtung zum Verändern der Zeilenlänge innerhalb der Bilderzeugungsfläche vorgesehen ist, die durch Aufrechterhaltung der optischen Konjugierung der jeweils Wirksamen Polygonspiegelfläche mit Bilderzeugungsfläche in Zeilenvorschubrichtung einen Ausgleich von bei unterschiedlichen Zeilenlängen auftretenden Pyramidalfehlern bewirkt, dadurch gekennzeichnet, daß die optischen Mittel mindestens einen Zylinderspiegel (44) mit optischer Wirkung in Zeilenvorschubrichtung enthalten, und daß di Einrichtung zum Verändern der Zeilenlänge Mittel zum Bewegen des Zylinderspiegels entlang des Strahlengangs (41a) in eine neue Position und Mittel zum Veränderen des Neigungswinkels des Zylinderspiegels zum Ausgleich von in der neuen Position auftretenden Pyramidalfehlern umfaßt.

2. Laserdrucker nach Anspruch 1, dadurch gekennzeichnet, daß die optischen Mittel mindestens zwei Zylinderspiegel (44a, 44b, 44c) unterschiedlicher Krümmungsradien und Neigungswinkel aufweisen und daß die Einrichtung zum Verändern der Zeilenlänge Mittel (44a', 44b', 44c') zum wahlweisen Einbringen von jeweils einem der Zylinderspiegel in den Strahlengang umfaßt.

3. Laserdrucker nach Anspruch 1, dadurch gekennzeichnet, daß die optischen Mittel (44)

a) ein erstes und zweites optisches System (72a, 72b, 74a, 74b) umfassen das jeweils dann wirksam ist, wenn der Strahlengang zur Bildung unterschiedlicher Zeilenlängen in der Bilderzeugungsfläche hindurchgefürt wird, wobei jedes der optischen Systeme einen Zylinderspiegel (74a, 74b) aufweist, der zwischen Polygon und Bilderzeugungsfläche angeordnet ist und zum Ausgleich der Pyramidalfehler auf den Strahl einwirkt, indem er die jeweils wirksame Polygonfläche mit der Bilderzeugungsfläche in Zeilenvorschubrichtung optisch konjugiert, und

b) zum Einschalten des ersten bzw. zweiten optischen Systems (72a ... 74b) in den Strahlengang einen zwischen einer ersten und einer zweiten Stellung bewegbaren Spielgel (70) aufweisen, und daß die Mittel zum Verändern der Zeilenlänge antriebsmiitel (40c) zum Bewegen des Spiegels zwischen einer ersten und zweiten Stellung aufweisen.

4. Laserdrucker nach einem der Ansprüche 1 bis 3, gekennzeichnet durch vor dem Polygon angeordnete Strahlformugsmittel (72a, 72b) zur Bildung einer Strahleinschnürung in der Zeilenverlaufsrichtung der neuen Formatgröße und Festlegen der Einschnürung nächst der Bilderzeugungsfläche.

5. Laserdrucker nach Anspruch 4, dadurch gekennzeichnet, daß die Strahlformungsmittel ein Varioobjektiv (34) zwei in der Zeilenverlaufsrichtung optisch wirksamen Zylinderlinsen (34a, 34b) umfassen.

6. Laserdrucker nach Anspruch 1, dadurch gekennzeichnet, daß die optischen Mittel einen Zylinderspiegel (44) aufweisen, der in einem ersten Zustand zum Erzeugen einer ersten auf die Bilderzeugungsfläche fokussierten Strahlpunktgröße für eine Reihe unterschiedlicher Zeilenlängen und in einem zweiten Zustand zum Erzeugen einer zweiten auf die Bilderzeugungsfläche fokussierten Strahlpunktgröße für mindestens eine weitere in vorgenannter Reihe nicht vorkommende Zeilenlänge wirksam ist.

7. Laserdrucker nach einem der Ansprüche 1 bis 6, gekennzeichnet durch Mittel (41b), die beim Verändern der Formatgröße des zu erzeugenden Bildes eine Änderung der Geschwindigkeit des in der Bilderzeugungsfläche angeordneten lichtempfindlichen Elements bewirken.

8. Laserdrucker nach Anspruch 2 oder 3, dadurch gekennzeichnet, daß die Zylinderspiegel zum Ausgleich der bei den verschiedenen Konjugierungen auftretenden Pyramidalfehler unterschiedliche Krümmungsradien und Neigungswinkel besitzen.

9. Laserdrucker nach einem der Ansprüche 1 bis 7, mit einem Speicher (14) zur Speicherung eines digitalisierten Bildes, dessen Bildpunkte Bildhelligkeitsabstufungen darstellen, gekennzeichnet durch zur periodischen Intensitätsmodulation des Lichtstrahls gemäß den gespeicherten Helligkeitsabstufungen der Bildpunkte einstellbare Mittel (12), wobei die Modulationsperiodizität von der Zeilenlänge in der Bilderzeugungsfläche abhängt.

10. Laserdrucker nach Anspruch 1, dadurch gekennzeichnet, daß an Stelle des rotierenden Polygons (30) ein von einem rotierenden Galvanometer angetriebener Spiegel verwendet wird.

11. Verfahren zum Verändern der Formatgröße eines von einem Gauß'schen Lasertrahl zu erzeugenden Bildes, wobei der Laserstrahl mit Hilfe eines Polygones zeilenweise quer über eine Bilderzeugungsfläche geführt wird und die folgenden Schritte umfaßt:

a) Verändern der Zeilenlänge in der Bilderzeugungsfläche;

b) einstellen des Zeilenstands; und

c) Ausgleich von Pyramidalfehlern bei der neuen Formatgröße; gekennzeichnet durch die zusätzlichen Schritte:

(i) Einstellen von Strahlgröße und Lage der Strahleinschnürung in Zeilenverlaufsrichtung; und

(ii) Einstellen der Strahlgröße in Zeilenvorschubrichtung.

# EP 0 218 636 B1

12. Verfahren nach Anspruch 11, gekennzeichnet durch den zusätzlichen Verfahrensschritt, daß die anamorphotische Verformung des Strahls durchgeführt word, bevor dieser das Polygon erriecht, so daß bei unterschiedlichen Bildformaten die Strahleinschnürung in der Zeilenverlaufsrichtung nächst der Bilderzeugungsfläche erfolgt.

## Revendications

1. Imprimante laser multi-formats comprenant une polygone rotatif (30) ayant des facettes formant miroir pout balayer en ligne, au moyen d'un faisceau, une zone d'image (PM) afin de former une image de sortie dans une telle zone, comprenant des moyens optique (44) disposés entre le polygone et la zone d'image pour conjuguer optiquement dans la direction de balayage de la page, la facette efficace du miroir avec la zone d'image afin de corriger les erreurs pyramidales, des moyens pour changer la longueur du balayage dè ligne dans la zone d'image (PM) et pour corriger les erreurs pyramidales pour différentes longueures de balayage de lignes en maintenant la conjugaison optique entre la facette efficace du polygone et la zone d'image dans la direction de balayage de la page, ladite imprimante laser étant caractérisée en ce que lesdits moyens optiques comprennent au moins un miroir cylindrique (44) ayant sa vergence dans la direction de balayage de la page, et en ce que lesdits moyens pour changer la longueur de balayage comprennent des moyens pour disposer ledit miroir cylindrique le long de l'axe optique en une nouvelle position sur l'axe et des moyens pour changer l'angle d'inclinaison dudit miroir cylindrique en cette nouvelle position afin de continuer à corriger les erreurs pyramidales.

2. Imprimante laser selon la revendication 1, dans laquelle lesdits moyens optiques comprennent au moins deux miroirs cylindriques (44a, 44b, 44c) avec différents rayons de courbure et différents angles d'inclinaison et en ce que lesdits moyens pour changer la longueur de balayage comprennent des moyens (44a', 44b', 44c') pour insérer sélectivement un seul des miroirs cylindriques dans l'axe optique du faisceau.

3. Imprimante laser selon la revendication 1, dans laquelle lesdits moyens optiques comprennent

a) un premier et un second système optique (72a, 72b, 74a, 74b) chacun d'eux étant efficace lorsque l'axe optique de faisceau leur phasse au travers afin de former une longueur différente de balayage de ligne dans la zone d'image, chacun desdits systèmes optiques comprenant un miroir cylindrique (74a, 74b) disposé entre le polygone et la zone d'image et permettant d'agir sur le faisceau afin de fournir une correcton de l'erreur pyramidale en conjuguant optiquement la facette efficace du polygone et la zone d'image dans la direction de balayage de page, et

b) un miroir (70) pouvant se déplacer entre un premìre et une seconde position pour insérer respectivement lesdits premier et second systèmes optiques dans l'axe optique du faisceau, et dans laquelle lesdites moyens pour modifier les moyens optiques comprennent des moyens d'entrainement (40c) pour déplacer le miroir de àsa première à sa seconde position.

4. Imprimante laser selon l'une quelconque des revendications 1 à 3, comprenant des moyens de (72a, 72b) mise en forme du faisceau disposés avant le polygone afin de former l'une des focales du faisceau dans la direction de balayage de ligne pour le nouveau formant et positionner une telle focale à côté de la zone d'image.

5. Imprimante laser selon la revendication 4, dans laquelle lesdits moyens de mise en forme du faisceau comprennent un système à focale variable (34) muni de deux lentilles cylindriques (34a, 34b) dont la vergence est seulement dans la direction de balayage de ligne.

6. Imprimante laser selon la revendication 1, dans laquelle lesdits moyens optiques comprennent un miroir cylindrique (44) agissant, dans une première position, pour produire une première taille de point de focalisation du faisceau dans la zone d'image pour un intervalle de longueurs de balayages de lignes et, dans une seconde, position, pour produite une seconde taille de point de focalisation du faisceau dans la zone d'image pour au moins une longueur prédéterminée de balayage de ligne non comprise dans ledit intervalle.

7. Imprimante laser selon l'une quelconque des revendications 1 à 6, comprenant des moyens (41b) pour changer la vitesse de déplacement de l'organe photosensible placé dans la zone d'image lorsque la taille de l'image de sortie est modifiée.

8. Imprimante laser selon l'une quelconque des revendications 2 à 3, dans laquelle lesdits miroirs cylindriques ont des rayons de courbure et des angles d'inclinaison différents pour corriger les erreurs pyramidales ainsi que les erreurs de mise au point respectives.

9. Imprimante laser selon l'une quelconque des revendications 1 à 7, comprenant une mémoire (14) pour stocker une image numérique formée d'éléments d'image représentant les niveaux de luminance, caractérisée en ce qu'elle comprend des moyens ajustables (12) pour, périodiquement, moduler en intensité ledit faisceau lumineux en fonction des niveax de luminance des éléments d'image stockés, la périodicité de modulation étant fonction de la longueur de balayage de linge dans la zone d'image.

10. Imprimante laser selon la revendication 1, dans laquelle ledit polygone rotatif (30) est remplacé par un miroir entrainé par un galvanomètre rotatif.

11. Procédé pour changer le formant d'une image de sortie produite par un faisceau gaussien de lumière laser qui balaye en ligne, au moyen d'un polygone, une zone d'image, ledit procédé comprenant les étapes suivantes:

a) changer la longueur du balayage de ligne dans la zone d'image,

b) ajuster l'écartement entre les balayages de lignes et

c) corriger les erreurs pyramidales pour le nouveau format, ledit procédé étant caractérisé en ce qu'il comprend en plus les étapes suivantes:

(i) ajuster la taille du faisceau et la position des focales dans la direction de balayage de ligne; et

(ii) ajuster la taille du faisceau dans la direction de balayage de page.

12. Procédé selon la revendication 11, dans lequel on rend le faisceau anamophique, en amount du polygone de telle sorte que, pour différents formats d'image, la focale du faisceau soit formée dans la direction de balayage de ligne à côté de la zone d'image.

FIG. I

1

FIG. 2

FIG. 3

2

FIG. 4

EP 0 218 636 B1

FIG. 5

FIG. 6

EP 0 218 636 B1

FIG. 7